Europäisches Patentamt

European Patent Office

Office européen des brevets

(11) Numéro de publication: **0 202 963**
**A1**

(12) **DEMANDE DE BREVET EUROPEEN**

(21) Numéro de dépôt: 86400731.5

(22) Date de dépôt: 04.04.86

(51) Int. Cl.⁴: **F16D 3/84**

(30) Priorité: **19.04.85 FR 8505976**

(43) Date de publication de la demande:
**26.11.86 Bulletin 86/48**

(84) Etats contractants désignés:
**DE GB IT**

(71) Demandeur: **COMPAGNIE DES PRODUITS**
**INDUSTRIELS DE L'OUEST (C.P.I.O.)**
**Boîte Postale 1226 Zone Industrielle de**
**Nantes Carquefou**
**F-44023 Nantes Cedex(FR)**

(72) Inventeur: **Baudrit, Patrick**
**La Grammoire**
**F-44120 Vertou(FR)**
Inventeur: **Copis, Philippe**
**Chemin de la Maillardière**
**F-44700 Orvault(FR)**
Inventeur: **Lallement, Serge**
**2, Les Hauts de l'Erdre**
**F-44240 La Chapelle sur Erdre(FR)**

(74) Mandataire: **Réal, Jacques et al**
**Régie Nationale des Usines Renault SCE**
**0804**
**F-92109 Boulogne Billancourt Cedex(FR)**

(54) **Soufflet de protection, notamment pour transmission avant de véhicule automobile.**

㉗ Soufflet de protection en matériau thermoplastique notamment pour transmission avant de véhicule automobile. Il est essentiellement constitué d'une coque rigide (30) et d'au moins une partie déformable (31-32) lors des débattements angulaires du joint de transmission (10-11), dissociant ainsi les fonctions de protection et d'articulation du soufflet.

FIG. 4

# SOUFFLET DE PROTECTION NOTAMMENT POUR TRANSMISSION AVANT DE VEHICULE AUTOMOBILE

La présente invention concerne un nouveau soufflet de protection pour joints articulés, notamment pour transmission de roues avant de véhicule automobile. Elle concerne plus particulièrement un élément protecteur en matériau thermoplastique pour joints de cardan à tripode ou à billes, autorisant de grands débattements angulaires, ceci avec une cinématique précise du profil de l'élément protecteur.

La récente utilisation des matériaux thermoplastiques pour la réalisation de tels éléments protecteurs s'est traduite par l'apparition de profils de soufflets généralement dérivés des formes utilisées pour le caoutchouc. Ces derniers prennent la forme de soufflets volumineux comportant des spires dont les parois forment des angles aigus au repos et dont les arêtes et les creux suivent une génératrice conique ou cylindrique. De tels produits ne sont pas dépourvus d'inconvénients. En effet, lors du braquage des roues, il apparaît une zone de spires en compression dans l'angle fermé et une zone de spires en traction dans la partie tendue. A cela se superpose un effet de vrillage des spires induit par la génératrice conique ou cylindrique du soufflet.

Ces phénomènes entraînent une abrasion des parois des spires par frottement relatif entre elles ainsi qu'un risque d'usure des creux de spires au contact des arêtes vives du tripode.

Suivant cette même conception, il apparaît ainsi qu'à chaque rotation du soufflet les spires sont soumises alternativement à une contrainte de traction puis de compression tandis que les arêtes et les creux de spires fonctionnent en flexion alternée, ce qui peut provoquer des fissurations des parois par fatigue, c'est-à-dire une crevaison prématurée entraînant à terme la dégradation des cardans par perte de graisse et introduction de corps étrangers.

L'ensemble de ces contraintes mécaniques, qui ne peuvent être absorbées grâce à l'élasticité propre du matériau thermoplastique, au contraire du caoutchouc, impose une répartition des épaisseurs de parois précise ainsi qu'un choix spécifique du matériau thermoplastique capable de supporter ces contraintes.

On peut remarquer que ces géométries à génératrices coniques ou cylindriques présentent généralement un inconvénient d'ordre cinématique dans le fait que le centre instantané de rotation du soufflet et celui propre au joint articulé, ne coïncident jamais et présentent un certain entraxe qui a pour effet d'induire sur le profil du soufflet, lors d'un débattement angulaire, la combinaison d'un mouvement de rotation et de translation ; translation préjudiciable aux spires du soufflet - (partie active) par le fait qu'elle engendre des contraintes de traction suivant les génératrices du protecteur.

On peut constater que ces géométries présentent également un inconvénient par le fait qu'il est demandé à la partie active du soufflet d'assurer les fonctions de protection et d'articulation.

La protection envers les agressions extérieures implique une certaine rigidité et l'articulation suivant les cinématiques précitées implique une certaine élasticité, ceci mettant en évidence une incompatibilité qui peut parfois imposer une limitation des possibilités de débattements angulaires du soufflet afin de garantir sa longévité.

Notons enfin que ces géométries confèrent aux soufflets une stabilité dynamique assez réduite en rotation haute vitesse sous l'effet balourd de la graisse en centrifugation.

La présente invention a pour but de pallier les inconvénients ci-dessus en définissant un profil particulier d'un soufflet de volume réduit présentant une protection renforcée aux agressions extérieures tout en garantissant un état de contraintes minimales et une meilleure stabilité dynamique en rotation.

L'invention sera décrite au regard des figures 1 à 15 ci-jointes, données à titre d'exemples non limitatifs, et qui se rapportent respectivement :

les figures 1 et 2, à une vue en coupe longitudinale d'un soufflet suivant l'état antérieur de la technique, respectivement sans et avec braquage des roues ;

-les figures 3 et 4, à des vues analogues d'un soufflet conforme à l'invention ;

- la figure 5, à une vue de détail en coupe longitudinale de la réalisation selon l'invention ;

-les figures 6 à 9, à une vue analogue d'une variante de l'invention ;

-les figures 10 et 11, à une vue analogue montrant deux façons d'assurer l'étanchéité du soufflet selon l'invention et de son support ;

-les figures 12 à 15, à une vue analogue relative au remplissage avec de la graisse du soufflet de l'invention.

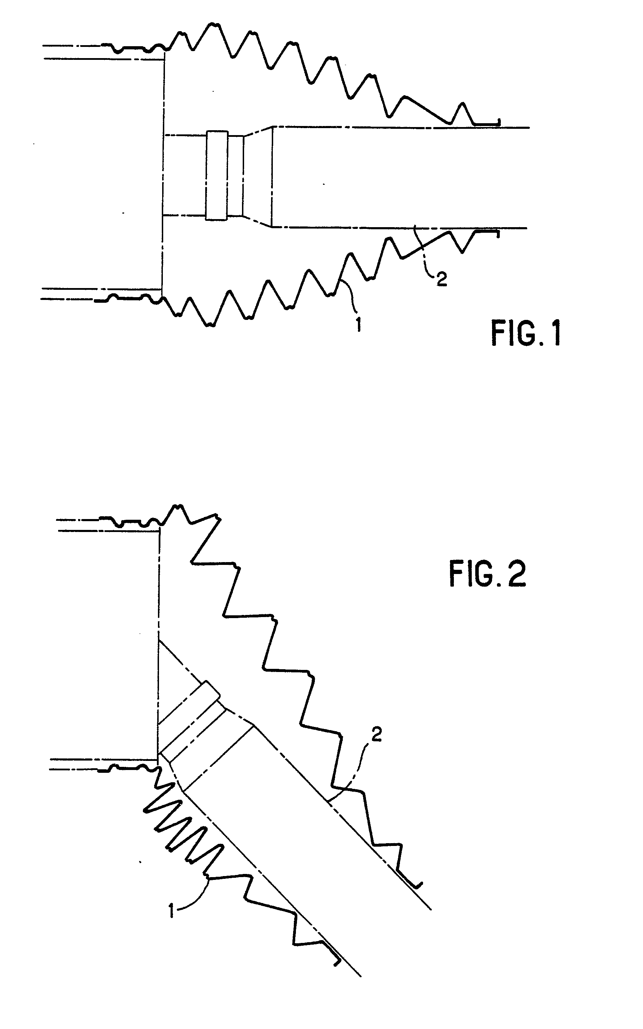

On voit à la figure 2 ce que devient le soufflet de la figure 1 lorsque l'on passe d'un braquage de roues nul à un braquage important. On constate que la zone 1 des spires correspond à une compression provoquant leur usure du fait de leur contact mutuel et avec les arêtes vives de la transmission 2.

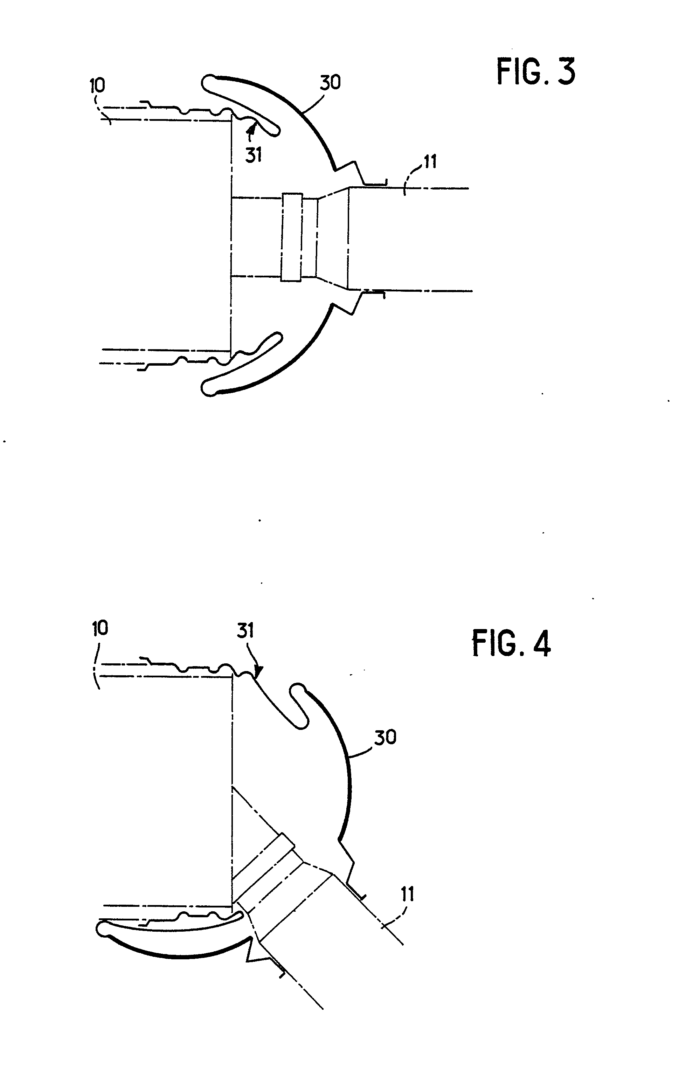

Le soufflet, selon l'invention, illustré aux figures 3 et suivantes, repose sur une conception de profil présentant une coque protectrice 30 de rigidité renforcée prolongée d'un profil déformable 31 assurant l'articulation du protecteur lors des débattements angulaires du joint de transmission.

Suivant cette conception, les fonctions de protection et d'articulation se trouvent dissociées et assurées respectivement par la coque 30, d'une part, et le profil 31 déformable, d'autre part.

La figure 3 montre l'état du soufflet, selon l'invention, mis en place sur l'élément de transmission à revêtir et dont l'angle de braquage est nul.

La géométrie de la coque rigide 30 est définie de manière à assurer les points suivants :

-à l'une de ses extrémités, sa forme est adaptée de manière à être fixée sur l'arbre ou le tube de transmission 11 ;

-la forme de la coque proprement dite est définie de manière.à couvrir en partie l'extrémité du bol de transmission 10, ceci en permettant toutefois les débattements angulaires de la transmission.

Cette coque 30 pourra avantageusement avoir un profil de calotte sphérique dont le centre coïncide avec le centre de rotation de la transmission lorsque le montage est effectué.

La figure 4 montre le soufflet selon l'invention pour un angle important de braquage.

Le profil 31 suit la coque 30 dans son déplacement et assure la liaison déformable entre cette dernière et le bol de transmission 10. Lors du montage sur l'élément de transmission, ce profil 31 est rentré dans la coque 30 ainsi qu'il apparaît sur la figure 3.

La géométrie du profil 31 est définie de manière à pouvoir rentrer par un effet de basculement au sein de la coque 30, d'une part, et de manière à se déformer sous les mouvements de rotation de la transmission, d'autre part. Par effet de basculement, il faut comprendre qu'il existe deux positions stables du profil 31 : une position sortie (après fabrication) et une position rentrée (en place sur la transmission).

Suivant cette conception, la partie déformable 31 et la coque 30 peuvent être constituées du même matériau thermoplastique et obtenues par une unique phase de fabrication grâce aux procédés tels que : extrusion-soufflage ou injection-soufflage.

Dans ce cas de figure, le profil de la coque 30 sera nervuré afin de lui conférer une rigidité radiale accrue tandis que la partie 31 sera conçue de manière à obtenir, d'une part, un effet de basculement à l'aide d'un profil particulier et, d'autre part, cet élément 31 comportera une surface développée suffisante pour les angles de braquage maximum.

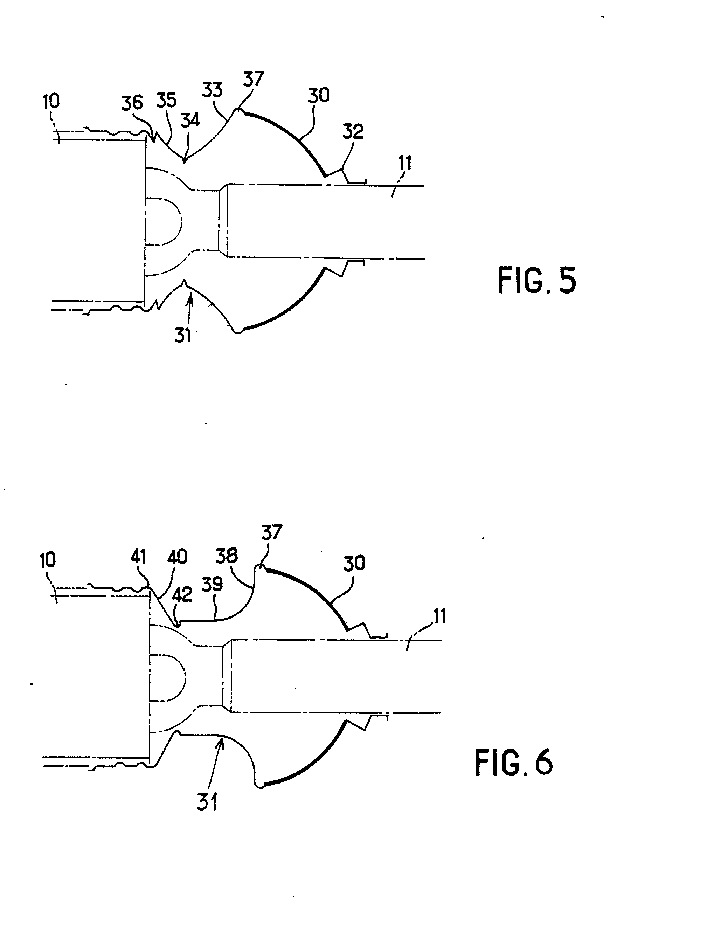

La figure 5 représente le soufflet tel qu'il est conçu pour sa mise en oeuvre, on retrouve la coque 30 en forme de calotte sphérique nervurée suivie du profil 31 comportant une géométrie particulière constituée des zones 33 à 36.

Le mécanisme rentrant de la partie 31 dans la coque 30, ou effet basculement, est obtenu selon la définition de la figure 5 grâce aux caractéristiques dimensionnelles suivantes :

-le rayon du profil 33, en coupe sur la figure 5, est inférieur au rayon de la calotte sphérique 30 au sein de laquelle il est destiné à rentrer ;

-de la même façon, le rayon du profil 35 est inférieur au rayon du profil 33 au sein duquel il est destiné à rentrer ;

-les plis 34, 36 et 37 assurent le rôle de charnières nécessaires au bon emboîtage des éléments de sphère 33 et 35 au sein de la coque 30.

Ces charnières sont également nécessaires à l'obtention d'une surface développée suffisante lors des braquages importants de l'élément de transmission.

Suivant la nature du matériau thermoplastique constituant le soufflet, la configuration de la partie active déformable 31 pourra être tout autre que celle mentionnée en figure 5.

Dans le cas d'une utilisation d'un matériau thermoplastique souple, il peut être avantageux de faire fonctionner la membrane 31 par roulement.

La figure 6 mentionne à titre d'exemple une géométrie particulière de la membrane 31 fonctionnant par roulement grâce aux profils 37, 38, 39 et 40.

Le profil cylindrique 39 est raccordé à la coque 30 par l'élément 38, d'une part, dont le rayon est inférieur au rayon de la coque 30, et par la charnière 37, d'autre part ; ce même profil 39 est relié au bol de transmission 10 par l'intermédiaire de l'enveloppe 40 articulée en son sommet et sa base, respectivement en 41 et 42.

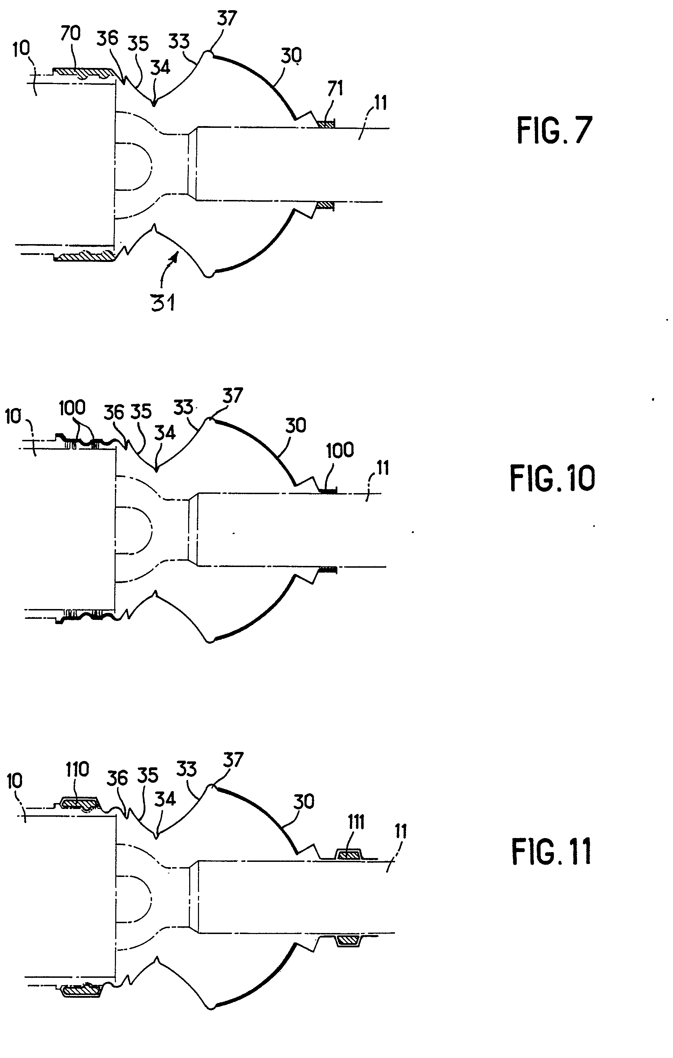

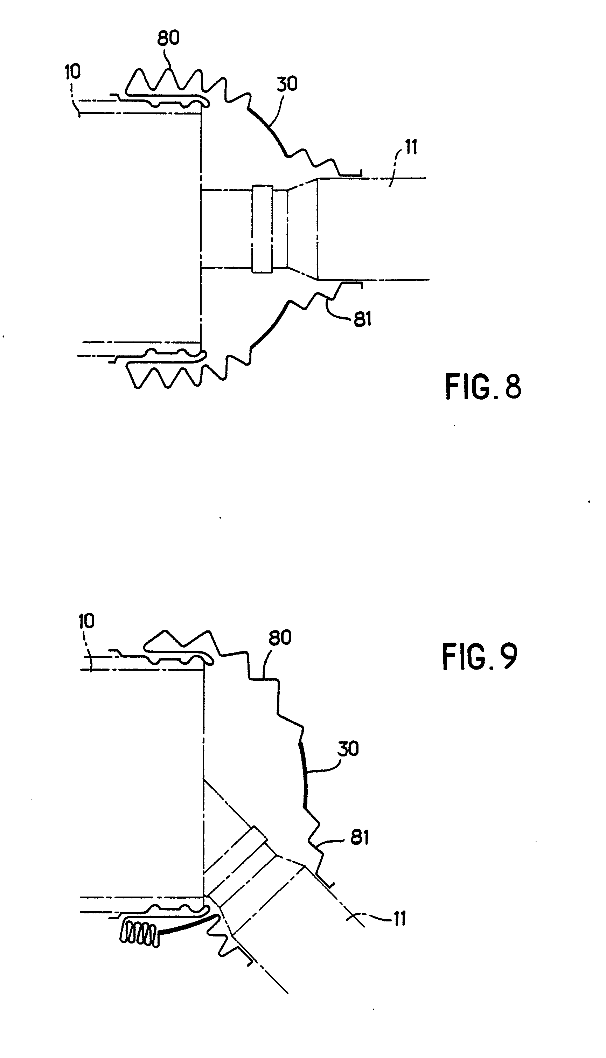

Conformément à l'invention, le soufflet peut également être réalisé de façon avantageuse à l'aide de deux matériaux thermoplastiques distincts par des procédés de transformation tels que : bi-injection ou bi-injection soufflage telles qu'illustrées à la figure 7. Cette configuration permet d'utiliser un matériau thermoplastique de dureté élevée pour la fabrication de la coque 30 tandis que la membrane 31 qui assure la fonction articulation est réalisée à l'aide d'un matériau thermoplastique de faible dureté. De plus, les extrémités du soufflet sont pourvues de manchons d'étanchéité 70-71 au regard des éléments de transmission 10-11, obtenus par moulage d'une mousse ou d'un matériau compact souple simultanément ou non par rapport au moulage du soufflet.

Dans tous les cas, monomatière ou multimatières, la conception du soufflet protecteur conforme à l'invention offre les avantages suivants :

-une protection renforcée aux agressions extérieures de types mécaniques, chocs, projection de graviers, etc. ;

-une excellente stabilité en rotation haute vitesse, ceci grâce à la coque rigide qui interdit tout effet balourd ;

-le soufflet présente un volume très réduit, ce qui permet, d'une part, de réduire le volume de graisse interne et, d'autre part, d'implanter ce type de soufflet compact dans un environnement d'organes mécaniques très réduit ;

-la cinématique particulière à cette conception et de type rotulaire permet de réduire le torseur des contraintes appliquées au soufflet aux seules contraintes de rotation ;

- le découplage des fonctions articulation et rotation permet l'adaptation d'un plus large éventail de matériaux thermoplastiques ;

-le fonctionnement particulier de type rotulaire du soufflet par lequel la membrane 31 se plie et se déplie ou roule contre la face interne de la coque 30 permet de maintenir le profil actif 31 éloigné des zones agressives que peut présenter la transmission.

Les possibilités de débattements angulaires extrêmes du soufflet dépendent des caractéristiques dimensionnelles de la coque rigide 30, de son positionnement le long de l'axe de transmission 11 et de l'adjonction de charnières d'articulation, une variante de l'invention est illustrée aux figures 8 et 9.

Selon celle-ci, de part et d'autre de la coque 30, sont disposés des soufflets 80-81 qui donnent de la souplesse et de l'ampleur à l'ensemble.

Par ailleurs, les deux points suivants doivent être assurés :

-l'étanchéité à la graisse aux deux extrémités du soufflet fixées au bol de transmission 10 et à l'arbre de transmission 11 ;

-la présence d'aménagements permettant le remplissage de graisse, à l'aide de canules, une fois le soufflet en place sur la transmission.

La fonction étanchéité du soufflet selon l'invention est avantageusement résolue à l'aide des solutions suivantes :

-l'obtention d'une bonne régularité dimensionnelle du soufflet au niveau des diamètres d'accrochage au bol 10 et à la transmission 11 combinée avec la présence de formes d'étanchéité adaptées telles que des lèvres ou des chicanes 100.

Ces caractéristiques dimensionnelles et profils d'étanchéité seront obtenus à l'aide de la technique de transformation par injection-soufflage.

Cette solution concerne les soufflets monomatière.

La figure 10 montre le profil d'un soufflet suivant cette technique de mise en oeuvre ;

-la présence aux extrémités du soufflet d'éléments 110-111 en un matériau souple, éventuellement en mousse, de préférence différent du matériau thermoplastique constituant ledit soufflet est illustrée à la figure 11.

En ce qui concerne le remplissage de graisse du soufflet après sa mise en place sur transmission, plusieurs solutions sont possibles :

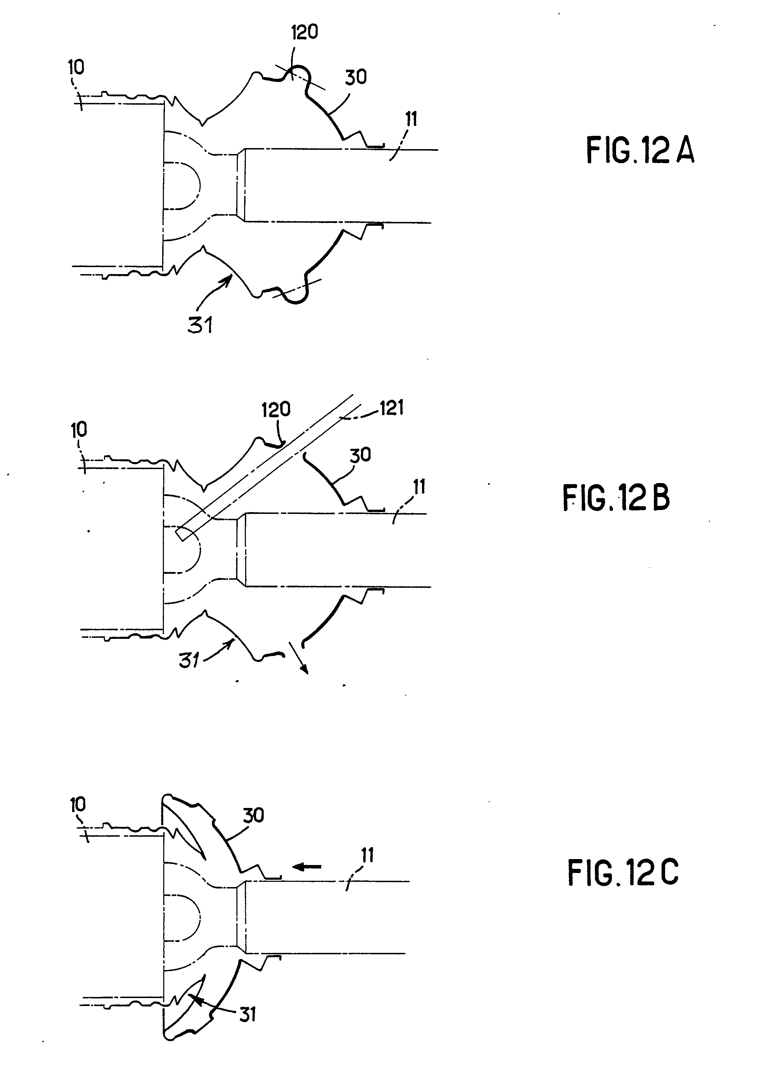

-Les figures 12 a, 12 b, 12 c représentent une disposition comportant des oreilles de remplissage situées dans la coque rigide.

Suivant cette solution, le protecteur comporte sur sa coque rigide 30 deux oreilles 120 percées permettant l'introduction d'une canule 121 d'injection de graisse, d'une part, et l'échappement de l'air lors du remplissage, d'autre part.

Les oreilles 120 sont obtenues à partir de formes adaptées dans la coque rigide venue de moulage. Lorsque l'injection de graisse est terminée, les canules d'injection 121 sont retirées et l'on vient thermosouder les oreilles à l'aide de pinces chauffantes, refermant de ce fait les orifices initialement aménagés dans les oreilles 120.

Les étapes successives du procédé de remplissage selon cette solution s'effectuent de la façon suivante :

. obtention du protecteur comportant des oreilles dans sa coque rigide,

. aménagement d'orifices de remplissage dans les oreilles par découpe de l'extrémité de ces dernières,

. phase de remplissage de graisse, le protecteur étant fixé sur la transmission,

. retrait des canules d'injection de graisse,

. thermosoudage des extrémités d'oreilles.

L'avantage de cette solution réside dans le fait que ces oreilles 120 sont aménagées sur une partie non active de l'élément protecteur, la coque 30, ce qui ne saurait être applicable sur un soufflet de conception classique.

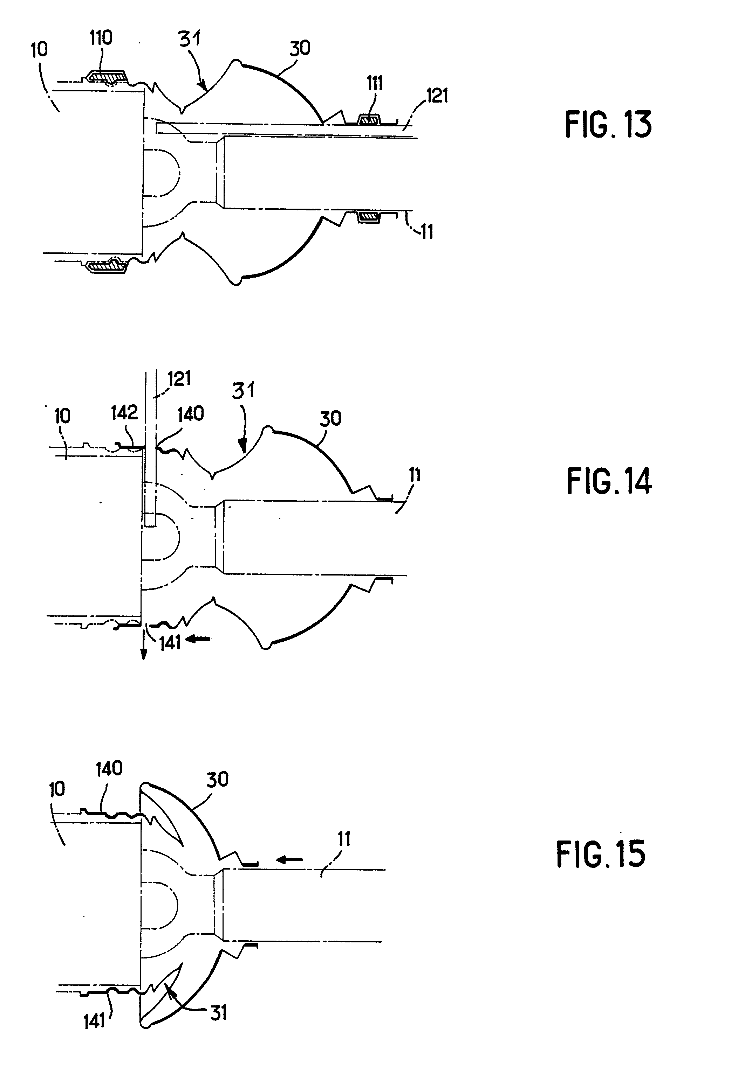

-La figure 13 se rapporte à une variante selon laquelle les canules de remplissage sont passées au niveau des joints souples d'étanchéité 110-111 de la disposition selon la figure 11.

Dans le cas de protecteurs en matériau thermoplastique, cette technique n'est applicable que si le soufflet comporte ces éléments souples 110-111, la rigidité des matériaux thermoplastiques constituant le corps du soufflet interdisant toute extension pour le passage de la canule 121.

-Selon les figures 14 et 15, on aménage deux orifices de remplissage 140-141 sur l'extrémité du soufflet 142 se fixant sur le bol de transmission 10.

Le soufflet est présenté sur l'élément de transmission 10 avec son extrémité 142 côté bol de transmission 10 partiellement emmanchée sur ce dernier de manière que les orifices 140-141 débouchent dans la cavité à remplir de graisse.

La canule d'injection 121 est alors introduite dans l'orifice 140 pour le remplissage de graisse tandis que le second orifice 141 sert à l'évacuation de l'air lors du remplissage. Une fois l'injection terminée, la canule 121 est retirée et le soufflet est emmanché complètement sur le bol 10 de transmission et fixé à l'aide d'un collier obstruant alors les orifices de remplissage 140-141.

L'avantage de cette solution simple est qu'elle ne nécessite pas la présence d'éléments souples d'étanchéité tels que 111 pour le passage de la canule 121.

**Revendications**

1 -Soufflet de protection en matériau thermoplastique, notamment pour transmission avant de véhicule automobile, caractérisé en ce qu'il est essentiellement constitué d'une coque rigide (30) et d'au moins une partie déformable (31-32) lors des débattements angulaires du joint de transmission (10-11), dissociant ainsi les fonctions de protection et d'articulation du soufflet.

2 -Soufflet de protection selon la revendication 1, caractérisé en ce que la coque (30) rigide a un profil de calotte sphérique, possédant de préférence des nervures, dont le centre coïncide avec le centre de rotation de la transmission (11) lorsque le montage est effectué, ladite coque (30) recouvrant alors et protégeant des agressions extérieures la partie déformable (31).

3 -Soufflet de protection selon la revendication 1, caractérisé en ce que la partie déformable (31), assurant l'articulation du soufflet, est constituée par au moins une zone de section concave (33-35-38) séparée des zones voisines par des plis (34-36-37-41-42) faisant fonction de charnière et permettant à ladite partie déformable (31) de se plier et de se rouler sous l'effet des débattements angulaires et de la rotation de l'élément de transmission (11).

4 - Soufflet de protection selon la revendication 1, caractérisé en ce qu'il est constitué de deux matériaux thermoplastiques différents, l'une plus rigide utilisée pour la coque (30), l'autre plus souple pour la partie déformable (31).

5 -Soufflet de protection selon la revendication 1, caractérisé en ce que les extrémités du soufflet sont pourvues d'éléments d'étanchéité (70-71) constitués par une mousse souple s'ajustant sur la transmission.

6 -Soufflet de protection selon la revendication 1, caractérisé en ce que les éléments d'étanchéité comportent des lèvres ou des chicanes (100).

7 -Soufflet de protection selon la revendication 1, caractérisé en ce que la coque (30) est venue de moulage avec les oreilles (120) dans lesquelles on découpe des orifices pour le passage de canules (121) permettant l'injection de graisse à l'intérieur du soufflet, lesdites oreilles (120) étant ultérieurement thermosoudées, l'opération de remplissage terminée et la canule (121) retirée.

8 -Soufflet de protection selon la revendication 1, caractérisé en ce que la canule de remplissage est introduite au niveau des éléments d'étanchéité souple (111).

9 -Soufflet de protection selon la revendication 1, caractérisé en ce que des orifices de remplissage de graisse (140) sont prévus à l'extrémité fixée sur le bol de transmission (10) ne débouchant sur la cavité à remplir que lors de son emmanchement partiel, l'emmanchement total n'intervenant qu'après l'opération de remplissage obstruant de ce fait les orifices (140).

FIG.1

FIG.2

FIG. 3

FIG. 4

0 202 963

FIG. 5

FIG. 6

FIG.7

FIG.10

FIG.11

FIG. 8

FIG. 9

FIG.12 A

FIG.12 B

FIG.12 C

0 202 963

FIG. 13

FIG. 14

FIG. 15

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-1 871 883  (GEYER)<br>* En entier * | 1-5 | F 16 D  3/84 |
| | --- | | |
| X | GB-A-2 107 412  (UNI-CARDAN)<br>*  Page 2, lignes 16-31; figure 1 * | 1,3,6 | |
| | --- | | |
| X | CH-A- 333 637  (GARRINGTONS)<br>* En entier * | 1,2 | |
| | --- | | |
| X | DE-A-2 933 695  (SCHMID)<br>* Page 4, figures 1,2 * | 1 | |
| | --- | | |
| A | DE-A-2 304 042  (VOLKSWAGEN)<br>* Page 4, figure 1 * | 1,8 | |
| | | | DOMAINES TECHNIQUES RECHERCHES (Int. Cl.4) |
| E | FR-A-2 554 533  (GLAENZER)<br>* En entier * | 1,2,6 | F 16 D |
| | ----- | | |

Le présent rapport de recherche a été établi pour toutes les revendications

| Lieu de la recherche | Date d'achèvement de la recherche | Examinateur |
|---|---|---|
| LA HAYE | 28-07-1986 | ORTHLIEB CH.E. |